# EUROPÄISCHE PATENTSCHRIFT

(11) **EP 2 574 410 B1**
(45) Veröffentlichungstag und Bekanntmachung des Hinweises auf die Patenterteilung: **23.04.2014**
(21) Anmeldenummer: 11183651.6
(22) Anmeldetag: 01.10.2011
(51) Int. Cl.: B21D 22/10, B21D 22/26

(54) **Vorrichtung zum Formen von tiefgezogenen Behältern**
Device for forming deep-drawn containers
Dispositif de formage de récipients emboutis

(43) Veröffentlichungstag der Anmeldung: 03.04.2013
(73) Patentinhaber: Amcor Flexibles Zutphen B.V., 7202 CE Zutphen (NL)
(72) Erfinder: Verbeek, Dirk Cornelius, 7325 PC Apeldoorn (NL); Kettelarij, Harry Johan, 7242 ES Lochem (NL)
(74) Vertreter: Gernet, Samuel Andreas

(56) Entgegenhaltungen:
- WO-A1-2011/012196
- FR-A1- 2 549 749
- GB-A- 2 258 181
- JP-A- 61 088 930
- JP-A- 62 267 028
- JP-A- 62 279 034

## Beschreibung

### Stand der Technik

Die Erfindung betrifft eine Vorrichtung zum Formen von tiefgezogenen Behältern nach dem Oberbegriff des Anspruchs 1.

Eine derartige Vorrichtung ist aus der WO 2011/012196 A1 und aus der FR 2549749 A1 bekannt. Bei der bekannten Vorrichtung ist ein aus elastischem Material bestehender Stempelkörper in Form eines Stempelrings vorgesehen, der entweder auf einem Stempelträger aufvulkanisiert oder mittels eines Einsatzes mit dem Stempelträger verbunden ist. Dadurch ist der Stempelkörper in Bezug auf seine Position zum Stempelträger nicht nur axial befestigt bzw. positioniert, sondern darüber hinaus auch in einer Ebene senkrecht zur Bewegungsrichtung des Stempelträgers bzw. Stempelwerkzeugs. Durch die spezielle Formgebung der bekannten Vorrichtung lassen sich tiefgezogene Behälter mit hoher Formgenauigkeit herstellen, die sich insbesondere besonders gut ineinander stapeln lassen, wodurch das Handling der aus einer verformbaren Materialbahn hergestellten Behälter vereinfacht wird.

Bei der bekannten Vorrichtung weist der Stempelring ein relativ hohes Volumen auf. Das führt beim Einsatz der bekannten Vorrichtung insbesondere hohen Taktzahlen dazu, dass durch die über die Materialbahn auf den Stempelring übertragene Verformungsenergie sich der Stempelring infolge seiner Formänderungen (Zusammenpressen und anschließendes wieder Entspannen) relativ stark erwärmt, und sich diese Wärme auch auf andere Bauteile der Vorrichtung, insbesondere den Stempelkörper, überträgt. Dadurch ergeben sich Nachteile hinsichtlich der Form- und Volumenstabilität der Vorrichtung. Darüber hinaus weist der bekannte Stempelring eine relativ komplexe Form auf, die sich in einem erhöhten Herstellungsaufwand und somit relativ hohen Fertigungskosten niederschlägt. Weiterhin weist er aufgrund der relativ großen Höhe in axialer Richtung eine relativ große Verformbarkeit auf, die die genaue Einstellung der Tiefziehkräfte erschwert.

### Offenbarung der Erfindung

Ausgehend von dem dargestellten Stand der Technik liegt der Erfindung die Aufgabe zugrunde, eine Vorrichtung zum Formen von tiefgezogenen Behältern nach dem Oberbegriff des Anspruchs 1 derart weiterzubilden, dass insbesondere die mechanischen und thermischen Eigenschaften des Stempelrings verbessert werden. Diese Aufgabe wird bei einer Vorrichtung zum Formen von tiefgezogenen Behältern mit den Merkmalen des Anspruchs 1 erfindungsgemäß dadurch gelöst, dass der Stempelring zum Stempelträger in einer Ebene senkrecht zur Bewegungsrichtung des Stempelträgers beweglich angeordnet ist. Mit anderen Worten gesagt bedeutet dies, dass beim Tiefziehen eines Behälters der Stempelring die Möglichkeit hat, sich in einer Ebene parallel zum Stempelträger selbst zu positionieren bzw. seine Position (geringfügig) zu ändern. Dadurch wird die Möglichkeit geschaffen, einen Stempelring mit gegenüber dem Stand der Technik verringerter Höhe, und somit insbesondere auch verringertem Volumen herzustellen. Dadurch ergibt sich eine geringere Erwärmung des Stempelrings infolge geringerer Verformungsrate bzw. eine verbesserte Wärmeabfuhr mit daraus folgender höherer thermischer und geometrischer Stabilität, insbesondere bei hohen Taktzahlen.

Vorteilhafte Weiterbildungen der erfindungsgemäßen Vorrichtung zum Formen von tiefgezogenen Behältern sind in den Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

Ganz besonders bevorzugt ist eine Ausgestaltung der Vorrichtung, bei der die einander zugewandten Stirnseiten des Stempelrings und des Stempelträgers oder eines Zwischenelements eine konische Form aufweisen. Dadurch findet beim Eintauchen des Stempelwerkzeugs in die Materialbahn eine Zentrierung des Stempelrings am Stempelträger statt. Dabei ist es nicht erforderlich, dass die Konizität der beiden Stirnflächen des Stempelrings und des Stempelträgers gleich ist. Wesentlich ist lediglich eine Konizität der beiden angesprochenen Stirnflächen, die eine Selbstzentrierung bewirken kann.

Um die Herstellkosten des Stempelrings zu reduzieren und gleichzeitig eine möglichst einfache und damit auch genaue Herstellbarkeit des Stempelrings zu ermöglichen wird darüber hinaus vorgeschlagen, dass die Umfangswand des Stempelrings eben ausgebildet ist.

Um eine axiale Positionierung des Stempelrings am Stempelträger zu ermöglichen bzw. zu vereinfachen, wird vorgeschlagen, dass der Stempelring am Stempelträger mittels eines mit dem Stempelträger verbundenen Einsatzes axial vorpositioniert ist, der auf der dem Stempelring zugewandten Seite eine pilzförmige Erweiterung aufweist, die mit einer konisch ausgebildeten Stirnfläche des Stempelrings zusammenwirkt. Dadurch wird insbesondere bereits beim ersten Kontakt des Stempelrings mit der Materialbahn der Stempelring in einer gewünschten Soll-Position positioniert.

Um beispielsweise ein und denselben Stempelträger mit unterschiedlichen Stempelringen einsetzen zu können, oder auf relativ einfache Art und Weise die Dimensionierung der tiefgezogenen Behälter beeinflussen zu können, kann es vorgesehen sein, dass zwischen dem Stempelträger und dem Stempelring ein ringförmiges Zwischenelement angeordnet ist. Dabei besteht das ringförmige Zwischenelement insbesondere aus Metall bzw. aus demselben Material wie der Stempelträger.

Damit die angesprochene Selbstzentrierung des Stempelrings zum Stempelträger ermöglicht wird, ist es bei letztgenannter Variante beim Einsatz eines Zwischenelementes bevorzugt vorgesehen, dass das Zwischenelement auf der dem Stempelring zugewandten Seite eine konisch ausgebildete Stirnseite mit einem Konuswinkel zwischen 0Grad und 20Grad aufweist, und dass die der Stirnseite zugewandte Stirnseite des Stempelrings ebenfalls konisch mit einem Konuswinkel zwischen 0Grad und 20Grad ausgebildet ist.

Wie bereits erläutert, weist der Stempelring gegenüber dem Stand der Technik eine reduzierte Bauhöhe auf. Um trotz der reduzierten Bauhöhe konische Behälter formen zu können, bei denen sich der Durchmesser vom Boden bis an den Randbereich des Behälters vergrößert, kann es darüber hinaus vorgesehen sein, dass der Stempelträger in Richtung zum Stempelring eine Umfangswand mit einem konisch ausgebildeten Bereich aufweist. Dadurch wird der Durchmesser des Stempelträgers in Richtung zum Behälterboden hin verkleinert bzw. minimiert, so dass vermieden wird, dass der Stempelträger im Bereich des Stempelrings im direkten Anlagekontakt der Außenwand des Behälters gelangt.

Ganz besonders bevorzugt ist eine geometrische Dimensionierung des Stempelrings, bei der das Höhen-/Durchmesserverhältnis des Stempelrings zwischen 1:3 und 1:10 beträgt.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine Vorrichtung zum Formen von rotationssymmetrischen, tiefgezogenen Behältern aus einer verformbaren Materialbahn in einem Längsschnitt,
- Fig. 2: einen Stempelträger eines Stempelwerkzeugs, wie er bei der Vorrichtung gemäß Fig. 1 verwendet wird, im Längsschnitt,
- Fig. 3: eine Zwischenplatte eines Stempelwerkzeugs gemäß Fig. 1, im Längsschnitt,
- Fig. 4: einen erfindungsgemäßen Stempelring, wie er bei dem Stempelwerkzeug gemäß Fig. 1 verwendet wird, im Längsschnitt,
- Fig. 5: ein Einsatz, wie er bei einem Stempelwerkzeug gemäß Fig. 1 verwendet wird, im Längsschnitt und
- Fig. 6: einen mittels der Vorrichtung gemäß Fig. 1 tiefgezogenen Behälter, ebenfalls im Längsschnitt.

Gleiche Bauteile bzw. Bauteile mit gleicher Funktion sind in den Figuren mit den gleichen Bezugsziffern versehen.

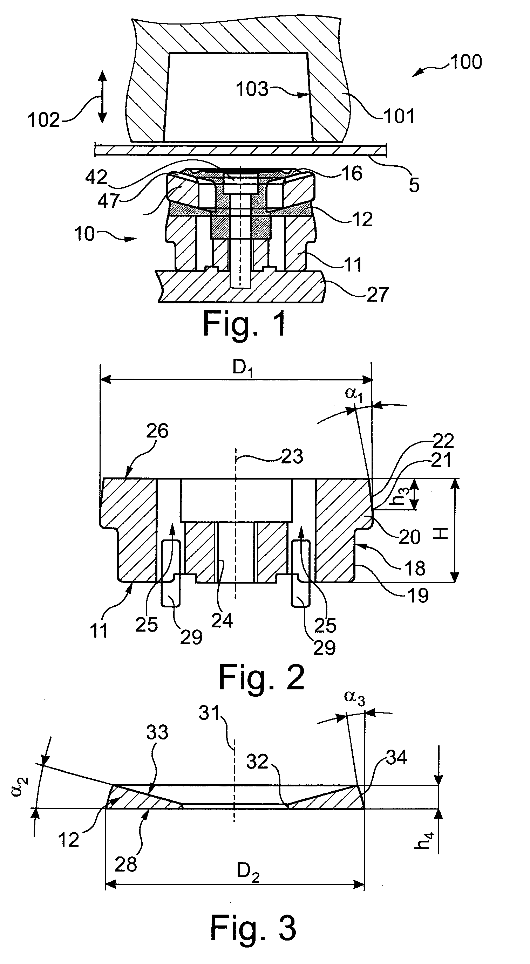

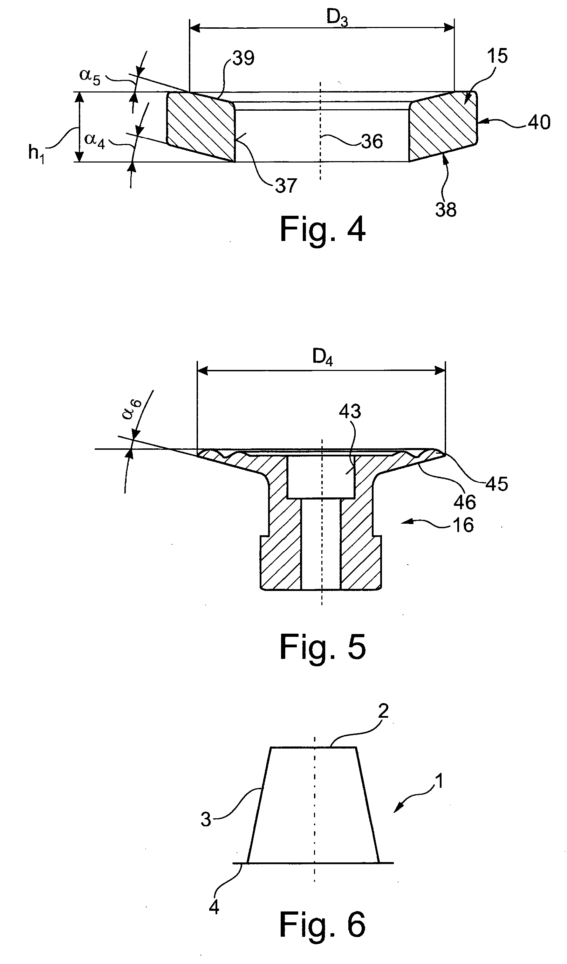

In der Fig. 1 ist eine Vorrichtung 100 zum Formen von tiefgezogenen Behältern 1 dargestellt. Gemäß der Fig. 6 weisen die mittels der Vorrichtung 100 hergestellten Behälter 1 eine konische Form mit einem Behälterboden 2, einer umlaufenden Behälterwand 3 und einen radial in der Ebene des Öffnungsbereichs des Behälters 1 nach außen ragenden Behälterrand 4 auf, der in Abänderung zu der in der Fig. 6 dargestellten Form auch als gerollter Behälterrand 4 ausgebildet sein kann. Die Behälter 1 werden aus einer verformbaren Materialbahn 5 hergestellt, die beispielsweise ein Aluminiumsubstrat enthält. Insbesondere ist das Aluminiumsubstrat wenigstens eine Aluminiumfolie, die durch Laminieren und/oder Extrudieren, wie durch eine Co-Extrusion, mit beispielsweise Kunststoffen oder durch Lacke beschichtet wird. Typische Materialbahnen 5 können eine der folgenden beiden Schichtaufbauten aufweisen, enthaltend die Schichten:
Siegelschicht/Aluminiumfolie/Lack
   oder
Siegelschicht/Aluminiumfolie/Kernschicht/Aluminiumfolie/Lack
bezüglich des genauen Aufbaus bzw. der Dicke der einzelnen Schichten, der genauen Materialzusammensetzung der einzelnen Schichten sowie weiterer möglicher Materialbahnen 5 wird auf die WO 2011/012 196 A1 der Anmelderin verwiesen, die insofern Bestandteil dieser Anmeldung sein soll.

Die Vorrichtung 100 besteht im Wesentlichen aus einer Matrize 101, die mittels eines nicht dargestellten Antriebs entsprechend des Doppelpfeils 102 auf- und abbeweglich angeordnet ist. Die Matrize 101 weist auf der der Materialbahn 5 zugewandten Seite eine Ausnehmung 103 auf, deren Form entsprechend der der Behälter 1 konisch ausgebildet ist.

Die Vorrichtung 100 umfasst neben der Matrize 101 einen ortsfest angeordneten Stempelkörper 10, der in dem in der Fig. 1 dargestellten Ausführungsbeispiel 4-teilig ausgebildet ist. Der Stempelkörper 10 weist einen aus Metall bestehenden Stempelträger 11, ein ringförmiges Zwischenelement 12, bevorzugt ebenfalls aus Metall bestehend, einen Stempelring 15 aus elastischem Material, und einen Einsatz 16 auf.

Ergänzend wird erwähnt, dass der Stempelkörper 10 auch 3-teilig ausgebildet sein kann. In diesem Fall kann es vorgesehen sein, dass das Zwischenelement 12 einstückig am Stempelträger 11 angeordnet bzw. mit diesem einstückig verbunden ist.

Der in der Fig. 2 dargestellte, insbesondere aus Stahl bestehende Stempelträger 11 der Höhe H ist im Wesentlichen ringförmig ausgebildet und weist eine Umfangswand 18 auf. Die Umfangswand 18 hat einen auf der dem Stempelring 15 abgewandten Seite im Durchmesser verringerten Abschnitt 19, an den sich in Richtung des Stempelrings 15 ein im Durchmesser vergrößerter Abschnitt 20 anschließt. Der Abschnitt 20 kann entweder durchgängig zylindrisch ausgebildet sein, oder aber, entsprechend der Fig. 2, einen ersten zylindrischen Bereich 21 umfassen, an dem sich ein zweiter, konisch ausgebildeter Bereich 22 der Höhe h₃ anschließt, dessen Neigungswinkel α₁ beispielsweise zwischen 1 Grad und 12Grad beträgt. Der Durchmesser D₁ des Abschnitts 20 entspricht dem Innendurchmesser des Behälters 1.

Weiterhin weist der Stempelträger 11 in seiner Längsachse 23 eine Gewindebohrung 24 zur Befestigung des Stempelkörpers 10 mittels einer in der Fig. 1 dargestellten Befestigungsschraube 42 an einem Trägerelement 27, beispielsweise einer Trägerplatte, auf. Dabei ist der Durchmesser der Gewindebohrung 24 größer als der Durchmesser der Befestigungsschraube 42. Zur besseren Kühlung bzw. Wärmeabfuhr insbesondere des Stempelkörpers 10 sind weiterhin mehrere, bevorzugt in gleichmäßigen Winkelabständen zueinander angeordnete Durchgangsbohrungen 25 vorgesehen. In vorzugsweise zwei dieser Durchgangsbohrungen 25 können Positionierstifte 29 eingesetzt sein, die der lagerichtigen Positionierung des Stempelträgers 11 zum Trägerelement 27 dienen. Die Demontage des Stempelkörpers 10 von dem Trägerelement 27 und den Positionierstiften 29 erfolgt über die Gewindebohrung 24 und die Befestigungsschraube 42. Auf der dem Zwischenelement 12 zugewandten Seite weist der Stempelträger 11 eine im Ausführungsbeispiel eben ausgebildete Stirnseite 26 auf.

An der Stirnseite 26 des Stempelträgers 11 liegt die ebenfalls ebene Stirnseite 28 des in der Fig. 3 dargestellten Zwischenelementes 12 an. Das ringförmige Zwischenelement 12 der Höhe h₄ weist einen Außendurchmesser D₂ auf, der dem Durchmesser des Stempelträgers 11 an dessen Stirnseite 28 angepasst ist. Ferner ist in der Längsachse 31 des Zwischenelements 12 eine Durchgangsbohrung 32 ausgebildet, die von dem Einsatz 16 durchsetzt ist. Bevorzugt ist die Größe bzw. der Durchmesser der Durchgangsbohrung 32 derart angepasst, dass über die Durchgangsbohrungen 25 des Stempelträgers 11 eine Verbindung zum Stempelring 15 ermöglicht wird, um Wärme aus dem Bereich des Stempelrings 15 abzuführen.

Auf der dem Stempelring 15 zugewandten Seite weist das Zwischenelement 12 eine konisch ausgebildete Stirnseite 33 mit einem Konuswinkel α₂ zwischen 0Grad und 20Grad auf. Ferner kann es vorgesehen sein, dass die (ebene) Umfangswand 34 des Zwischenelementes 12 ebenfalls konisch ausgebildet ist und einen Neigungswinkel α₃ aufweist, der einen harmonischen Übergang zu dem Stempelring 15 schafft. Hierbei ist der Neigungswinkel α₃ bevorzugt gleich groß wie der Neigungswinkel α₁, das heißt zwischen 0° und 12°.

Der in der Fig. 4 dargestellte, rotationssymmetrisch ausgebildete Stempelring 15 kann beispielsweise aus Naturgummi, einem AcrylnitrilButadien-Gummi oder aus einem Urethan-Gummi bestehen oder zumindest diese Materialien enthalten. Alternative Stempelkörpermaterialien sind synthetische Polyisopren-Gummi, StyrolButadien-Gummi, hydrierte Nitril-Gummi, Acryl-Gummi, Epichlorhydrin-Gummi, Epichlorhydrin-Ethylen-Oxid-Gummi, Chloropren-Gummi, Polybutadien-Gummi, Butyl-Gummi oder Ethylen-Propylen-Dien-Monomere.

Die Härte des Stempelrings 15 beträgt hierbei zwischen 50 ShA und 130 ShA, bevorzugt zwischen 70 ShA und 95 ShA.

Die Materialien des Stempelring 15 können Aktivatoren und/oder Akzeleratoren für einen später noch erwähnten Vulkanisierprozess, Weichmacher oder Plastifizierungsmittel, Stabilisatoren, insbesondere gegen Oxidierung und Ozonangriff, Verarbeitungshilfen, Klebrigmacher und/oder Verstärkungsmittel oder Füllstoffe enthalten. Als Verstärkungsmittel oder Füllstoffe kann der Stempelring 15 beispielsweise Russ, Siliziumoxid, Tonerde, Kreide oder Kalk enthalten. Der Stempelring 15 kann zumindest an dessen formungwirksamen Oberfläche oder durch das ganze Stempelringmaterial hindurch mit Schmierstoffen, beispielsweise Fluorid enthaltene Polymere oder Polyhalogenolefine, wie Polytetrafluorethylen (TEFLON®), α-Bornitrid oder Grafit, versehen sein. Ferner sind auch Farbstoffe möglich, die den Stempelring 15 nach Wunsch oder Bedarf in einer gewünschten Farbe erscheinen lassen.

Der Stempelring 15 weist in seiner Längsachse 36 eine Durchgangsbohrung 37 auf. Die dem Zwischenelement 12 zugewandte Stirnseite 38 des Stempelrings 15 ist konisch ausgebildet und weist einen Konuswinkel α₄ von beispielsweise 0Grad bis 20Grad auf, wobei die Konuswinkel α₂ und α₄ der Stirnseite 33 des Zwischenelements 12 und der Stirnseite 38 des Stempelrings 15 vorzugsweise identisch ausgebildet sind, jedoch auch unterschiedlich groß sein können. Wesentlich ist lediglich, dass durch die Wahl der entsprechenden Konuswinkel α₂ und α₄ eine Selbstzentrierung des Stempelrings 15 zum Zwischenelement 12 ermöglicht wird.

Der Stempelring 15 weist eine Höhe h₁ auf, die der Größe des Behälters 1 angepasst ist und beispielsweise zwischen 8mm und 50mm beträgt.

Bevorzugt ist die Höhe h₁ möglichst gering gewählt. Hierbei beträgt das Höhen-/Durchmesserverhältnis des Stempelrings 15 bevorzugt zwischen 1:3 und 1:10. Auf der der Stirnseite 38 abgewandten Seite weist der Stempelring 15 eine trichterförmige Einsenkung 39 mit einem Konuswinkel α₅ und einem Durchmesser D₃ auf, wobei die beiden Konuswinkel α₄ und α₅ unterschiedlich groß sein können, wobei die Konuswinkel α₄ und α₅ Werte beispielsweise zwischen 0°und 20° aufweisen können.

Die Umfangswand 40 des Stempelrings 15 ist eben ausgebildet und entweder zylindrisch, oder mit einem (nicht dargestellten) Konuswinkel von bis zu 30°ausgebildet sein, abhängig von der Form des Behälters 1.

Das Zwischenelement 12 und der Stempelring 15 werden mittels des in der Fig. 5 dargestellten Einsatzes 16 axial zum Stempelträger 11 vorpositioniert bzw. mit diesem verbunden, indem der Einsatz 16 mittels der Befestigungsschraube 42 (Fig. 1) mit dem Trägerelement 27 verschraubt wird. Hierzu weist der Einsatz 16 eine entsprechende Stufenbohrung 43 zur Aufnahme der Befestigungsschraube 42 auf. Der Einsatz 16 ist auf der der Materialbahn 5 zugewandten Seite mit einer pilzförmigen Erweiterung 45 mit dem Durchmesser D₄ ausgestattet, deren Unterseite 46 zur Anlage an der Einsenkung 39 des Stempelrings 15 dient. Hierzu weist die Unterseite 46 einen Konuswinkel α₆ von beispielsweise 0Grad bis 20Grad auf, wobei der Konuswinkel α₆ dem Konuswinkel α₅ der Einsenkung 39 des Stempelrings 15 angepasst ist. Bei montiertem Einsatz 16 ist zwischen dem Stempelring 15 und dem Einsatz 16 ein Ringspalt 47 ausgebildet.

Beim Herstellen der Behälter 1 durch eine Abwärtsbewegung der Matrize 101 in Richtung des Stempelkörpers 10 gelangt die Materialwand 5 in Anlagekontakt mit dem Stempelkörper 10. Dabei kann sich der Stempelring 15 in einer horizontalen Ebene, das heißt senkrecht zur Längsachse 36 um ein (geringes) Maß bewegen, wobei er beim Eintauchen in die Materialbahn 5 über die Form der Ausnehmung 103 der Matrize 101 sowie über die Form der Stirnflächen an dem Zwischenelement 12 und dem Stempelring 15 zentriert wird.

Die soweit beschriebene Vorrichtung 100 bzw. der Stempelkörper 10 können in vielfältiger Art und Weise abgewandelt bzw. modifiziert werden, ohne vom Erfindungsgedanken abzuweichen. Dieser besteht in einer Minimierung des Volumens des Stempelrings 15, die eine Verringerung der erforderlichen Tiefzieh- und Haltekräfte zur Folge hat. Weiterhin wird durch die erfindungsgemäße Ausbildung des Stempelrings 15 eine geringerer Verschleiß und somit eine vergrößerte Lebensdauer des Stempelrings 15, bei gleichzeitig einfacher und kostengünstiger Herstellbarkeit und einfacher Montage und einfachem Austausch ermöglicht. Wichtig ist es auch, dass der Stempelring 15 relativ zum Stempelträger 11 in einer horizontalen Ebene beweglich angeordnet ist.

## Patentansprüche

1. Vorrichtung (100) zum Formen von tiefgezogenen Behältern (1), mit einer eine konische Ausnehmung (103) aufweisenden Matrize (101), die mit einem Stempelkörper (10) zusammenwirkt, der beim Eintauchen des Stempelkörpers (10) in die Matrize (101) mit einer verformbaren Materialbahn (5) in Wirkverbindung gelangt, wobei der Stempelkörper (10) aus einem aus elastischen Material bestehenden Stempelring (15) und einem Stempelträger (11) besteht,
**dadurch gekennzeichnet,**
**dass** der Stempelring (15) zum Stempelträger (11) in einer Ebene senkrecht zur Bewegungsrichtung (102) des Stempelkörpers (10) beweglich angeordnet ist.

2. Vorrichtung nach Anspruch 1,
**dadurch gekennzeichnet,**
**dass** die einander zugewandten Stirnseiten (33, 38) des Stempelrings (15) und des Stempelträgers (11) oder eines Zwischenelements (12) eine konische Form aufweisen.

3. Vorrichtung nach Anspruch 1 oder 2,
**dadurch gekennzeichnet,**
**dass** die Umfangswand (40) des Stempelrings (15) eben ausgebildet ist.

4. Vorrichtung nach einem der Ansprüche 1 bis 3,
**dadurch gekennzeichnet,**
**dass** der Stempelring (15) am Stempelträger (11) mittels eines mit dem Stempelträger (11) verbundenen Einsatzes (16) axial vorpositioniert ist, der auf der dem Stempelring (15) zugewandten Seite eine pilzförmige Erweiterung (45) aufweist, deren Unterseite (46) mit einer konisch ausgebildeten Stirnfläche des Stempelrings (15) zusammenwirkt, die vorzugsweise in Form einer Einsenkung (39) ausgebildet ist.

5. Vorrichtung nach einem der Ansprüche 1 bis 4,
**dadurch gekennzeichnet,**
**dass** zwischen dem Stempelträger (11) und dem Stempelring (15) ein ringförmiges Zwischenelement (12) angeordnet ist.

6. Vorrichtung nach Anspruch 5,
**dadurch gekennzeichnet,**
**dass** das Zwischenelement (12) auf der dem Stempelring (15) zugewandten Seite eine konisch ausgebildete Stirnseite (33) mit einem Konuswinkel (α₂) zwischen 0Grad und 20Grad aufweist, und dass die der Stirnseite (33) zugewandte Stirnseite (38) des Stempelrings (15) ebenfalls konisch mit einem Konuswinkel (α₄) zwischen 0Grad und 20Grad ausgebildet ist.

7. Vorrichtung nach Anspruch 8,
**dadurch gekennzeichnet,**
**dass** die beiden Konuswinkel (α₂, α₄) des Zwischenelements (12) und des Stempelrings (15) gleich groß sind.

8. Vorrichtung nach einem der Ansprüche 1 bis 7,
**dadurch gekennzeichnet,**
**dass** der Stempelträger (11) in Richtung zum Stempelring (15) eine Umfangswand (18) mit einem konisch ausgebildeten Bereich (22) aufweist.

9. Vorrichtung nach Anspruch 8,
**dadurch gekennzeichnet,**
**dass** der Bereich (22) einen Neigungswinkel (α₁) zwischen 1Grad und 12Grad aufweist, wobei der Durchmesser des Stempelträgers (11) in Richtung zum Stempelring (15) hin abnimmt.

10. Vorrichtung nach einem der Ansprüche 1 bis 9,
**dadurch gekennzeichnet,**
**dass** das Höhen-/Durchmesserverhältnis des Stempelrings (15) zwischen 1:3 und 1:10 beträgt.

## Claims

1. Device (100) for shaping deep-drawn containers (1), with a female die (101), which has a conical recess (103) and cooperates with a male die body (10), which, when the male die body (10) dips into the female die (101), enters into an operative connection with a deformable material web (5), wherein the male die body (10) consists of a male die ring (15), which consists of an elastic material, and a male die carrier (11), **characterised in that** the male die ring (15) is movably arranged with respect to the male die carrier (11) in a plane perpendicular to the movement direction (102) of the male die body (10).

2. Device according to claim 1, **characterised in that** mutually facing end faces (33, 38) of the male die ring (15) and of the male die carrier (11), or an intermediate element (12), have a conical shape.

3. Device according to claim 1 or 2, **characterised in that** the peripheral wall (40) of the male die ring (15) is straight.

4. Device according to any one of claims 1 to 3, **characterised in that** the male die ring (15) is axially prepositioned on the male die carrier (11) by means of an insert (16) connected to the male die carrier (11), said insert having, on the side facing the male die ring (15), a mushroomshape widening (45), the lower side (46) of which cooperates with a conically configured end face of the male die ring (15), which is preferably configured in the shape of a depression (39).

5. Device according to any one of claims 1 to 4, **characterised in that** an annular intermediate element (12) is arranged between the male die carrier (11) and the male die ring (15).

6. Device according to claim 5, **characterised in that** the intermediate element (12) on the side facing the male die ring (15) has a conical end face (33) with a cone angle (α₂) between 0° and 20°, and **in that** the end face (38) of the male die ring (15) facing the end face (33) is also conical with a cone angle (α₄) between 0° and 20°.

7. Device according to claim 8, **characterised in that** the two cone angles (α₂, α₄) of the intermediate element (12) and the male die ring (15) are the same dimension.

8. Device according to any one of claims 1 to 7, **characterised in that** the male die carrier (11), in the direction of the male die ring (15), has a peripheral wall (18) with a conically configured region (22).

9. Device according to claim 8, **characterised in that** the region (22) has an inclination angle (α₁) between 1° and 12°, wherein the diameter of the male die carrier (11) decreases in the direction of the male die ring (15).

10. Device according to any one of claims 1 to 9, **characterised in that** the height/diameter ratio of the male die ring (15) is between 1:3 and 1:10.

## Revendications

1. Dispositif (100) pour le formage de récipients (1) emboutis, comprenant une matrice (101) présentant un évidement conique (103), la matrice interagissant avec un corps de poinçon (10), qui, lors de la plongée du corps de poinçon (10) dans la matrice (101), entre en liaison active avec une nappe de matériau (5) déformable, le corps de poinçon (10) étant constitué d'un anneau de poinçon (15) réalisé en un matériau élastique, et d'un support de poinçon (11),
**caractérisé**
**en ce que** l'anneau de poinçon (15) est agencé de manière à être mobile par rapport au support de poinçon (11), dans un plan perpendiculaire à la direction de déplacement (102) du corps de poinçon (10).

2. Dispositif selon la revendication 1,
**caractérisé**
**en ce que** les faces frontales (33, 38) dirigées l'une vers l'autre, de l'anneau de poinçon (15) et du support de poinçon (11) ou d'un élément intercalaire (12), présentent une forme conique.

3. Dispositif selon la revendication 1 ou la revendication 2,
**caractérisé**
**en ce que** la paroi périphérique (40) de l'anneau de poinçon (15) est d'une configuration lisse.

4. Dispositif selon l'une des revendications 1 à 3,
**caractérisé**
**en ce que** l'anneau de poinçon (15) est pré-positionné axialement sur le support de poinçon (11) au moyen d'un insert (16), qui est relié au support de poinçon (11), et présente, sur le côté dirigé vers l'anneau de poinçon (15), un élargissement (45) en forme de champignon dont le côté inférieur (46) interagit avec une surface frontale de configuration conique de l'anneau de poinçon (15), qui est de préférence réalisée sous la forme d'un lamage (39).

5. Dispositif selon l'une des revendications 1 à 4,
**caractérisé**
**en ce qu'**entre le support de poinçon (11) et l'anneau de poinçon (15) est agencé un élément intercalaire (12) de forme annulaire.

6. Dispositif selon la revendication 5,
**caractérisé**
**en ce que** l'élément intercalaire (12) présente, sur le côté dirigé vers l'anneau de poinçon (15), une face frontale (33) de configuration conique, avec un angle de cône (α₂) entre 0 degré et 20 degré, et en ce que la face frontale (38) de l'anneau de poinçon (15), qui est dirigée vers la face frontale (33), est également de configuration conique, avec un angle de cône (α₄) entre 0 degré et 20 degré.

7. Dispositif selon la revendication 8,
**caractérisé**
**en ce que** les deux angles de cône (α₂, α₄) de l'élément intercalaire (12) et de l'anneau de poinçon (15) sont de même grandeur.

8. Dispositif selon l'une des revendications 1 à 7,
**caractérisé**
**en ce que** le support de poinçon (11) présente, en direction de l'anneau de poinçon (15), une paroi périphérique (18) comprenant une zone (22) de configuration conique.

9. Dispositif selon la revendication 8,
**caractérisé**
**en ce que** la zone (22) présente un angle d'inclinaison (α₁) entre 1 degré et 12 degré, le diamètre du support de poinçon (11) diminuant en direction de l'anneau de poinçon (15).

10. Dispositif selon l'une des revendications 1 à 9,
**caractérisé**
**en ce que** le rapport hauteur/diamètre de l'anneau de poinçon (15) se situe entre 1:3 et 1:10.
